(19) Europäisches Patentamt / European Patent Office / Office européen des brevets

(11) **EP 3 499 776 A1**

(12) **EUROPEAN PATENT APPLICATION**
published in accordance with Art. 153(4) EPC

(43) Date of publication:
**19.06.2019 Bulletin 2019/25**

(51) Int Cl.:
*H04L 5/00* (2006.01)          *H04L 1/06* (2006.01)
*H04B 7/04* (2017.01)

(21) Application number: **17838593.6**

(22) Date of filing: **01.08.2017**

(86) International application number:
**PCT/CN2017/095390**

(87) International publication number:
**WO 2018/028463 (15.02.2018 Gazette 2018/07)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **12.08.2016 CN 201610664527**

(71) Applicant: ZTE Corporation
Shenzhen, Guangdong 518057 (CN)

(72) Inventors:
• **GAO, Bo**
  **Shenzhen**
  **Guangdong 518057 (CN)**
• **YUAN, Yifei**
  **Shenzhen**
  **Guangdong 518057 (CN)**
• **WANG, Xinhui**
  **Shenzhen**
  **Guangdong 518057 (CN)**

(74) Representative: **Regimbeau**
**20, rue de Chazelles**
**75847 Paris Cedex 17 (FR)**

(54) **METHOD AND DEVICE FOR TRANSMITTING PILOT**

(57)    Provided in the embodiments of the present invention are a method and a device for transmitting a pilot. The method comprises: a transmitting terminal determining N precoding vectors; the transmitting terminal generating a pilot according to the N precoding vectors; and the transmitting terminal transmitting the pilot to a receiving terminal on M time-frequency resources, M and N both being integers greater than or equal to 1. The present invention solves the problem in the relevant art that, when a pilot is generated on the basis of a certain directional precoding codebook, in the case of a large-scale antenna array, data of optional beams of a transceiver is increased significantly and the number of resulting beam combinations of the transceiver is increased sharply, leading to dramatic increase in pilot overheads, achieving the effect of reducing training expenses.

A transmitting end determines N precoding vectors — S202

The transmitting end generates a pilot according to the N precoding vectors — S204

The transmitting end transmits the pilot to a receiving end on M time-frequency resources, where the M and the N are integers greater than or equal to 1 — S206

**FIG. 2**

**Description**

**TECHNICAL FIELD**

The present invention relates to communications and, in particular, to a pilot transmission method and apparatus.

**BACKGROUND**

As the Institute for Electrical and Electronic Engineers (IEEE) and the 3rd Generation Partnership Project (3GPP) standards organization keep making efforts in the high frequency band (i.e., millimeter wave communications), the high frequency band will become an important innovation of 5G New Radio Access Technology (5G New RAT) by use of its significant advantage of a large bandwidth, works on solving the current problem of increasingly congested spectrum resources and massive access to physical networks, and will become an important direction for the development of future mobile communications.

However, while high-band communications gain abundant spectrum resources, channels in high-band communications have defects such as large loss of propagation path, greater absorption of air (especially oxygen), and great rain attenuation impacts. This will inevitably affect the effective coverage, communication reliability and potential deployment scenarios of high-band communication systems.

In the related art, a high-band communication system can utilize the features of short high-band wavelengths and easy antenna integration, and in high-band wireless standards such as 3GPP New RAT and IEEE 802.11ay, precoding techniques (especially phase-shifter-based analog precoding) are widely used to generate directional beams having high antenna gains. Multi-antenna arrays and precoding techniques (beamforming schemes) are used to obtain high antenna gains and combat signal transmission losses, thereby ensuring link margins and improving communication robustness.

To implement precoding training for generating directional beams under multiple users, which is also called beam training, the related art generates a pilot on the basis of a deterministic directional precoding codebook, performs full-space scanning, and enumerates all possible combinations of received and transmitted beams. Therefore, with a large-scale antenna array, data about optional beams at the receiving and transmitting ends increases greatly, and the number of beam combinations at the receiving and transmitting ends increases sharply, thereby causing a surge in pilot overheads.

In view of the above problem, no effective solution has yet been proposed in the related art.

**SUMMARY**

Embodiments of the present invention provide a pilot transmission method and apparatus to at least solve the problem where with a large-scale antenna array, data about optional beams at the receiving and transmitting ends increases greatly, and the number of beam combinations at the receiving and transmitting ends increases sharply in the related art, thereby causing a surge in pilot overheads.

According to an embodiment of the present invention, provided is a pilot transmission method.

The method includes: determining, by a transmitting end, N precoding vectors; generating, by the transmitting end, a pilot according to the N precoding vectors; and transmitting, by the transmitting end, the pilot to a receiving end on M time-frequency resources, where the M and the N are integers greater than or equal to 1.

Optionally, the method further includes: notifying, by the transmitting end, the receiving end of a correspondence between the M time-frequency resources and the N precoding vectors.

Optionally, the determining, by the transmitting end, the N precoding vectors includes: determining each of the N precoding vectors based on: selecting Q2 vectors from a codebook comprising Q1 vectors by the transmitting end, where the Q1 and the Q2 are integers greater than or equal to 1 and the Q1 is greater than or equal to the Q2; generating, by the transmitting end, E weight elements according to a random function or a pseudorandom function, where the E is an integer greater than or equal to 1; generating, by the transmitting end, a vector according to the Q2 vectors and the E weight elements; performing, by the transmitting end, numerical mapping on the generated vector according to a limiting condition of a value range of a preset precoding vector, and mapping each element in the generated vector to a nearest legal value; and forming, by the transmitting end, one of the precoding vectors based on mapped values.

Optionally, the random function includes one of: a random complex Gaussian distribution function and a random complex Bernoulli distribution function.

Optionally, the pseudorandom function includes one of: a pseudorandom m sequence; a pseudorandom M sequence and a Golay sequence.

Optionally, the generating, by the transmitting end, the vector according to the Q2 vectors and the E weight elements includes one of the following: generating, by the transmitting end, the vector by adding results of multiplication of each of the Q2 vectors by a respective one of the E weight elements; in condition that the transmitting end determines that the Q2 is less than or equal to the E, generating the vector by adding results of multiplication of each of the Q2 vectors by a respective one of Q2 weight elements that are selected from the E weight elements; and in condition that the transmitting end determines that the E is less than or equal to the Q2, generating the vector by adding results of multiplication of each of the E weight elements by a respective one of E vectors that are selected from the Q2 vectors.

Optionally, the generating, by the transmitting end, the pilot according to the N precoding vectors includes: generating, by the transmitting end, the pilot based on multiplication of a predetermined reference signal and the precoding vectors.

Optionally, a correspondence between the M time-frequency resources and the N precoding vectors includes one of the following: mapping any one of the N precoding vectors to at least one of the M time-frequency resources; and grouping the N precoding vectors in units of K, and mapping each group of precoding vectors to at least one of the M time-frequency resources, where the K is an integer greater than or equal to 1.

Optionally, the mapping includes one of the following: a random mapping; and a mapping based on a specific function.

Optionally, the precoding vectors include one of the following: precoding vectors configured or selected by the transmitting end according to predetermined information, which include one of the following: precoding vectors allowed by a constant amplitude and a limited phase, precoding vectors allowed by a limited amplitude and a limited phase, and precoding vectors under no constraint of amplitude and phase; and precoding vectors by precoding a reference signal by the transmitting end, which include one of the following: digital precoding vectors, analog precoding vectors, and mixed analog and digital precoding vectors.

Optionally, a transmit beam pattern corresponding to the pilot includes at least one of the following features: an intensity of the beam pattern in any direction or a distance between the beam pattern and an origin is less than a specific threshold; and a value of a cross-correlation between any two beam patterns in spatial response is less than a specific threshold.

According to another embodiment of the present invention, provided is a pilot transmission method. The method includes: determining, by a transmitting end, X weight vectors; generating, by the transmitting end, a pilot according to the X weight vectors and a precoding codebook; and transmitting, by the transmitting end, the pilot to a receiving end on Y time-frequency resources, where the X and the Y are integers greater than or equal to 1.

Optionally, the method further includes: notifying, by the transmitting end, the receiving end of a correspondence between the X weight vectors and the Y time-frequency resources.

Optionally, the determining, by the transmitting end, the X weight vectors includes: determining each weight vector of the X weight vectors by: setting, by the transmitting end, K elements in the each weight vector to be zero according to configuration information, where K is an integer greater than or equal to 0; and regenerating, by the transmitting end, a value of an element set to be non-zero in the each weight vector according to a random function or a pseudorandom function.

Optionally, the random function includes one of: a random complex Gaussian distribution function and a random complex Bernoulli distribution function.

Optionally, the pseudorandom function includes one of: a pseudorandom m sequence, a pseudorandom M sequence and a Golay sequence.

Optionally, the generating, by the transmitting end, a pilot according to the X weight vectors and the precoding codebook includes: generating, by the transmitting end, a vector S based on multiplication of a reference signal by the X weight vectors; and acquiring, by the transmitting end, the pilot by adding results of multiplication of each precoding vector in the precoding codebook by a respective element in the vector S.

Optionally, the precoding vectors include one of the following: precoding vectors allowed by a constant amplitude and a limited phase; precoding vectors allowed by a limited amplitude and a limited phase; and precoding vectors under no constraint of amplitude and phase.

Optionally, a correspondence between the X time-frequency resources and the Y weight vectors includes one of the following: mapping any one of the Y weight vectors to at least one of the X time-frequency resources; and grouping the Y weight vectors in units of L, and mapping each group of weight vectors to at least one of the X time-frequency resources, where the L is an integer greater than or equal to 1.

Optionally, the mapping includes one of the following: a random mapping; and a mapping based on a specific function.

Optionally, a transmit beam pattern corresponding to the pilot includes at least one of the following features: an intensity of the beam pattern in any direction or a distance between the beam pattern and an origin is less than a specific threshold; and a value of a cross-correlation between any two beam patterns in spatial response is less than a specific threshold.

Optionally, the determining, by the transmitting end, the X weight vectors includes: determining each of the X weight vectors by: generating E weight elements according to a random function or a pseudorandom function, and selecting R vectors from a preset vector set; and generating a weight vector according to the E weight elements and the R vectors, where the E and the R are integers greater than or equal to 1.

Optionally, the generating the weight vector according to the E weight elements and the R vectors includes one of the following: generating the vector by adding results of multiplication of each of the R vectors by a respective one of the E weight elements; in condition that the R is less than or equal to the E, generating the vector by adding results of multiplication of each of the R vectors by a respective one of R weight elements that are selected from the E weight elements; and in condition that the E is less than or equal to the R, generating the vector by adding results of multiplication of each of the E vector elements by a respective one of E vectors selected from the R vectors.

Optionally, the random function includes one: a random complex Gaussian distribution function and a random complex Bernoulli distribution function.

Optionally, the pseudorandom function includes one of: a pseudorandom m sequence, a pseudorandom M sequence and a Golay sequence.

According to another embodiment of the present invention, provided is a pilot transmission apparatus, which is applied in a transmitting end. The apparatus includes: a first determining module, which is configured to determine N precoding vectors; a first generating module, which is configured to generate a pilot according to the N precoding vectors; and a second transmitting module, which is configured to transmit the pilot to a receiving end on M time-frequency resources, where the M and the N are integers greater than or equal to 1.

Optionally, the apparatus further includes: a first notification module, which is configured to notify the receiving end of a correspondence between the M time-frequency resources and the N precoding vectors.

Optionally, the apparatus further includes: a first determining module, which is configured to determine each of the N precoding vectors by: selecting Q2 vectors from a codebook including Q1 vectors, where the Q1 and the Q2 are integers greater than or equal to 1 and the Q1 is greater than or equal to the Q2; generating E weight elements according to a random function or a pseudorandom function, where the E is an integer greater than or equal to 1; generating a vector according to the Q2 vectors and the E weight elements; performing numerical mapping on the generated vector according to a limiting condition of a value range of a preset precoding vector, and mapping each element in the generated vector to a nearest legal value; and forming one of the precoding vectors based on mapped values.

According to another embodiment of the present invention, provided is a pilot transmission apparatus, which is applied to a transmitting end. The apparatus includes: a second determining module, which is configured to determine X weight vectors; a second generating module, which is configured to generate a pilot according to the X weight vectors and a precoding codebook; and a second transmitting module, which is configured to transmit the pilot to a receiving end on Y time-frequency resources, where the X and the Y are integers greater than or equal to 1.

Optionally, the apparatus further includes: a second notification module, which is configured to notify the receiving end of a correspondence between the X weight vectors and the Y time-frequency resources.

Optionally, the determining module includes: a setting unit, which is configured to set K elements in the each weight vector to be zero, where K is an integer greater than or equal to 0; and a first generating unit, which is configured to regenerate a value of an element set to be non-zero in the each weight vector according to a random function or a pseudorandom function.

Optionally, the second determining module includes: a second generating unit, which is configured to generate E weight elements according to a random function or a pseudorandom function, and select R vectors from a preset vector set; and a third generating unit, which is configured to generate a weight vector according to the E weight elements and the R vectors, where the E and the R are integers greater than or equal to 1.

Optionally, the third generating unit includes one of the following: a first generating subunit, which is configured to generate the vector by adding results of multiplication of each of the R vectors by a respective one of the E weight elements; a second generating subunit, which is configured to, in condition that the R is less than or equal to the E, generate the vector by adding results of multiplication of each of the R vectors by a respective one of R weight elements that are selected from the E weight elements; and a third generating subunit, which is configured to, in condition that the E is less than or equal to the R, generate the vector by adding results of multiplication of each of the E vector elements by a respective one of E vectors selected from the R vectors.

Another embodiment of the present invention provides a storage medium. The storage medium is configured to store program codes for performing the preceding steps.

Another embodiment of the present invention provides a processor. The processor is configured to execute programs. When executed, the programs perform any one of the preceding methods.

Through the present invention, after determining N precoding vectors, a transmitting end generates a pilot according to the N precoding vectors and transmits the pilot to a receiving end on M time-frequency resources. M and N are integers greater than or equal to 1. Therefore, the method can solve the problem where a pilot is generated on the basis of a deterministic directional precoding codebook, and with a large-scale antenna array, data about optional beams at the receiving and transmitting ends increases greatly, and the number of beam combinations at the receiving and transmitting ends increases sharply in the related art, thereby causing a surge in pilot overheads; and the method can reduce training costs.

## BRIEF DESCRIPTION OF DRAWINGS

The drawings described herein are used to provide a further understanding of the present invention, and form a part of the present application. The exemplary embodiments and descriptions thereof in the present invention are used to explain the present invention and do not limit the present invention in an improper way. In the drawings:

FIG. 1 is a block diagram illustrating a hardware structure of a mobile terminal in a pilot transmission method according to embodiments of the present invention;

FIG. 2 is a flowchart (No. 1) of a method according to embodiments of the present invention;

FIG. 3 is a flowchart (No. 2) of a method according to embodiments of the present invention;

FIG. 4 is a structure diagram of a hybrid precoding (also referred to as hybrid beamforming) transceiver for the present invention;

FIG. 5 is a schematic diagram of a pilot generation method according to specific embodiments;

FIG. 6 is a schematic diagram of another pilot generation method according to specific embodiments;

FIG. 7 is a schematic diagram illustrating a mapping between time-frequency resources and precoding vectors according to specific embodiments;

FIG. 8 is a schematic diagram illustrating another mapping between time-frequency resources and precoding vectors according to specific embodiments;

FIG. 9 is a flowchart of an algorithm for implementing multipath precoding (beam) combination detection according to specific embodiments;

FIG. 10 is a flowchart of feasible hybrid precoding (beam) training according to specific embodiments;

FIG. 11 is a block diagram (No. 1) of a pilot transmission apparatus according to embodiments of the present invention;

FIG. 12 is a preferred block diagram (No. 1) of a pilot transmission apparatus according to embodiments of the present invention;

FIG. 13 is a block diagram (No. 2) of a pilot transmission apparatus according to embodiments of the present invention;

FIG. 14 is a preferred block diagram (No. 2) of a pilot transmission apparatus according to embodiments of the present invention;

FIG. 15 is a block diagram (No. 1) of a second determining module 132 of a pilot transmission apparatus according to embodiments of the present invention;

FIG. 16 is a block diagram (No. 2) of a second determining module 132 of a pilot transmission apparatus according to embodiments of the present invention; and

FIG. 17 is a block diagram of a third generating module 164 of a pilot transmission apparatus according to embodiments of the present invention.

## DETAILED DESCRIPTION

The present invention will be detailed below with reference to the accompanying drawings in conjunction with the embodiments. If not in collision, the embodiments described herein and the features thereof can be combined with each other.

It is to be noted that the terms "first", "second" and the like in the description, claims and drawings of the present invention are used to distinguish between similar objects and are not necessarily used to describe a particular order or sequence.

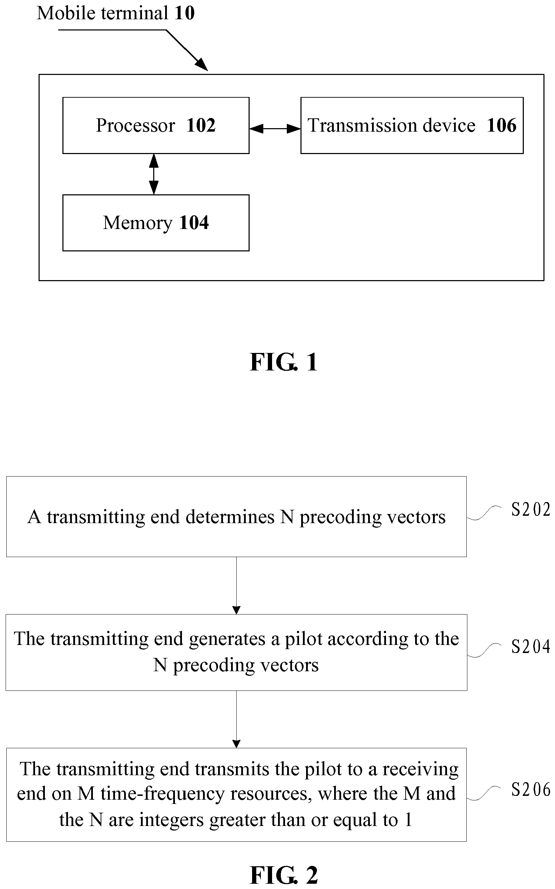

The method embodiments of embodiments of the present application can be implemented on a mobile terminal, a computer terminal, or the like. Using running on a mobile terminal as an example, FIG. 1 is a block diagram illustrating a hardware structure of a mobile terminal in a pilot transmission method according to embodiments of the present invention. As shown in FIG. 1, a mobile terminal 10 may include one or more (merely one is shown in FIG. 1) processors 102 (the processor 102 may include, but is not limited to, a processing device such as a microprocessor MCU or a programmable logic device FPGA), a memory 104 for storing data, and a transmission device 106 for communication functions. It is to be understood by those skilled in the art that the structure shown in FIG. 1 is merely illustrative and does not limit the structure of the preceding electronic device. For example, the mobile terminal 10 may also include more or fewer components than those shown in FIG. 1, or have a different configuration than that shown in FIG. 1.

The memory 104 may be used for storing software programs and modules of application software, such as program instructions/modules corresponding to the pilot transmission method in embodiments of the present invention. The processor 102 executes the software programs and modules stored in the memory 104 to implement various functional applications and data processing, that is, implement the preceding method. The memory 104 may include a high-speed random access memory, and may also include a non-volatile memory such as one or more magnetic storage devices, flash memories, or other non-volatile solid state memories. In some examples, the memory 104 may further include memories that are remotely disposed with respect to the processor 102. These remote memories can be connected to the terminal 10 via a network. Examples of the preceding network include, but are not limited to, the Internet, an intranet, a local area network, a mobile communication network and a combination thereof.

The transmission device 106 is used for receiving or transmitting data via a network. Examples of the preceding network may include a wireless network provided by a communication provider of the mobile terminal 10. In one example, the transmission device 106 includes a Network Interface Controller (NIC) that can be connected to other network devices through a base station to communicate with the Internet. In one example, the transmission device 106 may be a Radio Frequency (RF) module for communicating with the Internet wirelessly.

This embodiment provides a pilot transmission method running on the preceding mobile terminal. FIG. 2 is a flowchart (No.1) of a method according to embodiments of the present invention. As shown in FIG. 2, the method includes the steps described below.

In step S202, a transmitting end determines N precoding vectors.

In step S204, the transmitting end generates a pilot according to the N precoding vectors.

In step S206, the transmitting end transmits the pilot to a receiving end on M time-frequency resources, where the M and the N are integers greater than or equal to 1.

Through the preceding steps, after determining N precoding vectors, a transmitting end generates a pilot according to the N precoding vectors and transmits the pilot to a receiving end on M time-frequency resources. M and N are integers greater than or equal to 1. Therefore, the method solves the problem where a pilot is generated on the basis of a deterministic directional precoding codebook, and with a large-scale antenna array, data about optional beams at the receiving and transmitting ends increases greatly, and the number of beam combinations at the receiving and transmitting ends increases sharply in the related art, thereby causing a surge in pilot overheads; and the method reduces training costs.

In an optional embodiment, the method further includes that the transmitting end notifies the receiving end of a correspondence between the M time-frequency resources and the N precoding vectors. In this embodiment, the transmitting end is a pilot transmitting end.

In an optional embodiment, the determining, by the transmitting end, the N precoding vectors includes: determining each of the N precoding vectors based on: selecting Q2 vectors from a codebook including Q1 vectors by the transmitting end, where the Q1 and the Q2 are integers greater than or equal to 1 and the Q1 is greater than or equal to the Q2; generating, by the transmitting end, E weight elements according to a random function or a pseudorandom function, where the E is an integer greater than or equal to 1; generating, by the transmitting end, a vector according to the Q2 vectors and the E weight elements; performing, by the transmitting end, numerical mapping on the generated vector according to a limiting condition of a value range of a preset precoding vector, and mapping each element in the generated vector to a nearest legal value; and forming, by the transmitting end, one of the precoding vectors based on mapped values. In this embodiment, the preceding known information, that is, configuration information, includes that the system A provides the system B with initial received and transmitted beam directions or a set of potential optimal precoding vectors, and the system B uses this as the initial value and performs a scenario of precoding (beam) training in the set of optimal precoding vectors.

In an optional embodiment, the random function includes one of: a random complex Gaussian distribution function and a random complex Bernoulli distribution function.

In an optional embodiment, the pseudorandom function includes one of: a pseudorandom m sequence, a pseudorandom M sequence and a Golay sequence.

In an optional embodiment, the generating, by the transmitting end, the vector according to the Q2 vectors and the E weight elements includes one of the following: generating, by the transmitting end, the vector by adding results of multiplication of each of the Q2 vectors by a respective one of the E weight elements; in condition that the transmitting end determines that the Q2 is less than or equal to the E, generating the vector by adding results of multiplication of each of the Q2 vectors by a respective one of Q2 weight elements that are selected from the E weight elements; and in condition that the transmitting end determines that the E is less than or equal to the Q2, generating the vector by adding results of multiplication of each of the E weight elements by a respective one of E vectors that are selected from the Q2 vectors.

In an optional embodiment, the generating, by the transmitting end, the pilot according to the N precoding vectors may include: generating, by the transmitting end, the pilot based on multiplication of a predetermined reference signal and the precoding vectors. In this embodiment, the transmitted radio beam corresponding to the preceding pilot has at least one of the following features: for each radio frequency beam, there is no obvious spatial directionality; for any two radio frequency beams, correlation in spatial domain is low.

In an optional embodiment, a correspondence between the M time-frequency resources and the N precoding vectors includes one of the following: mapping any one of the N precoding vectors to at least one of the M time-frequency resources; and grouping the N precoding vectors in units of K, and mapping each group of precoding vectors to at least one of the M time-frequency resources, where the K is an integer greater than or equal to 1. In this embodiment, the time-frequency resource refers to a unit that can be independently distinguished in the time domain or the frequency domain.

In an optional embodiment, the mapping includes one of the following: a random mapping; and a mapping based on a specific function.

In an optional embodiment, the precoding vectors include one of the following: precoding vectors configured or selected by the transmitting end according to predetermined information, which include one of the following: precoding vectors allowed by a constant amplitude and a limited phase, precoding vectors allowed by a limited amplitude and a limited phase, and precoding vectors under no constraint of amplitude and phase; and precoding vectors by precoding a reference signal by the transmitting end, which include one of the following: digital precoding vectors, analog precoding vectors, and mixed analog and digital precoding vectors.

In an optional embodiment, a transmit beam pattern corresponding to the pilot includes at least one of the following features: an intensity of the beam pattern in any direction or a distance between the beam pattern and an origin is less than a specific threshold; and a value of a cross-correlation between any two beam patterns in spatial response is less than a specific threshold.

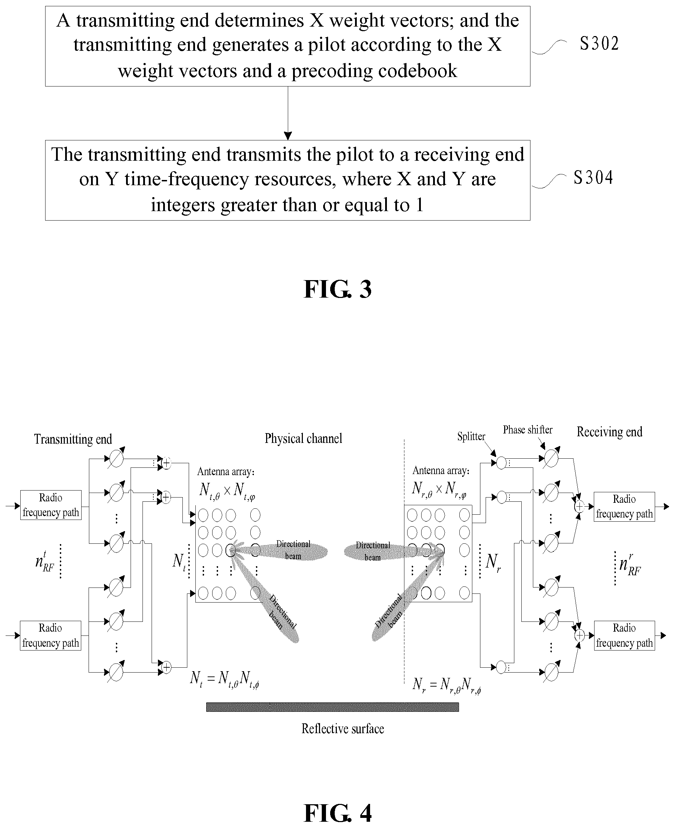

This embodiment provides a pilot transmission method. FIG. 3 is a flowchart (No. 2) of a method according to embodiments of the present invention. As shown in FIG. 3, the method includes the steps described below.

In step S302, a transmitting end determines X weight vectors; and the transmitting end generates a pilot according to the X weight vectors and a precoding codebook.

In step S304, the transmitting end transmits the pilot to a receiving end on Y time-frequency resources, where X and Y are integers greater than or equal to 1.

Through the preceding steps, after determining X weight vectors, a transmitting end generates a pilot according to the X weight vectors and a precoding codebook, and transmits the pilot to a receiving end on Y time-frequency resources. X and Y are integers greater than or equal to 1. Therefore, the method can solve the problem where with a large-scale antenna array, data about optional beams at the receiving and transmitting ends increases greatly, and the number of beam combinations at the receiving and transmitting ends increases sharply in the existing art, thereby causing a surge in pilot overheads; the method improves the probability of successfully distinguishing between different physical paths by the pilot transmitting end; the method facilitates the configuration of the optimal transmitting-end precoding weights and receiving-end antenna weights by the transmitting end and the receiving end to achieve an effective improvement of the overall wireless communication spectrum efficiency.

Optionally, the execution subject of the preceding steps may be a transmitting end, but is not limited thereto.

In an optional embodiment, the method further includes: notifying, by the transmitting end, the receiving end of a correspondence between the X time-frequency resources and the Y weight vectors.

In an optional embodiment, the determining, by the transmitting end, the X weight vectors includes: determining each weight vector of the X weight vectors by: setting, by the transmitting end, K elements in the each weight vector to be zero according to configuration information, wherein K is an integer greater than or equal to 0; and regenerating, by the transmitting end, a value of an element set to be non-zero in the each weight vector according to a random function or a pseudorandom function.

In an optional embodiment, the random function includes one of: a random complex Gaussian distribution function and a random complex Bernoulli distribution function.

In an optional embodiment, the pseudorandom function includes one of: a pseudorandom m sequence, a pseudorandom M sequence and a Golay sequence.

In an optional embodiment, the generating, by the transmitting end, a pilot according to the X weight vectors and the precoding codebook includes: generating, by the transmitting end, a vector S based on multiplication of a reference signal by the X weight vectors; and acquiring, by the transmitting end, the pilot by adding results of multiplication of each precoding vector in the precoding codebook by a respective element in the vector S.

In an optional embodiment, the precoding vectors include one of the following: precoding vectors allowed by a constant amplitude and a limited phase; precoding vectors allowed by a limited amplitude and a limited phase; and precoding vectors under no constraint of amplitude and phase.

In an optional embodiment, a correspondence between the X time-frequency resources and the Y weight vectors includes one of the following: mapping any one of the Y weight vectors to at least one of the X time-frequency resources; and grouping the Y weight vectors in units of L, and mapping each group of weight vectors to at least one of the X time-frequency resources, where the L is an integer greater than or equal to 1.

In an optional embodiment, the mapping includes one of the following: a random mapping; and a mapping based on a specific function.

In an optional embodiment, a beam pattern transmitted corresponding to the pilot includes at least one of the following features: an intensity of the beam pattern in any direction or a distance between the beam pattern and an origin is less than a specific threshold; and a value of a cross-correlation between any two beam patterns in spatial response is less than a specific threshold.

In an optional embodiment, the determining, by the transmitting end, the X weight vectors by: generating E weight elements according to a random function or a pseudorandom function, and selecting R vectors from a preset vector set; and generating a weight vector according to the E weight elements and the R vectors, where the E and the R are integers greater than or equal to 1.

In an optional embodiment, the generating the weight vector according to the E weight elements and the R vectors includes one of the following: generating the vector by adding results of multiplication of each of the R vectors by a respective one of the E weight elements; in condition that the R is less than or equal to the E, generating the vector by adding results of multiplication of each of the R vectors by a respective one of R weight elements that are selected from the E weight elements; and in condition that the E is less than or equal to the R, generating the vector by adding results of multiplication of each of the E vector elements by a respective one of E vectors selected from the R vectors.

In an optional embodiment, the random function includes one of: a random complex Gaussian distribution function and a random complex Bernoulli distribution function.

In an optional embodiment, the pseudorandom function includes one of: a pseudorandom m sequence, a pseudorandom M sequence and a Golay sequence.

From the description of the embodiments described above, it will be apparent to those skilled in the art that the method of any embodiment described above may be implemented by use of software plus a necessary general-purpose hardware platform, or may of course be implemented by hardware, but in many cases, the former is a preferred implementation. Based on this understanding, the solution provided by the present invention substantially, or the part contributing to the related art, may be embodied in the form of a software product. The software product is stored on a storage medium (such as a ROM/RAM, a magnetic disk or an optical disk) and includes several instructions for enabling a terminal device (which may be a mobile phone, a computer, a server or a network device) to execute the method according to each embodiment of the present invention.

The present invention will be described below in conjunction with specific embodiments.

FIG. 4 is a structure diagram of a hybrid precoding (also referred to as hybrid beamforming) transceiver for the present invention. As shown in FIG. 4, multi-antenna units and multiple radio frequency links are configured at a transmitting end and a receiving end in a system. Each radio frequency link is interconnected with an antenna array unit (without repelling partial connection scenario). Each antenna unit has a digitally keyed phase shifter. A high-band system implements beamforming at the analog end by loading different phase shift amounts to the signals on the respective antenna elements. In particular, in a hybrid beamforming transceiver, there are multiple radio frequency signal streams. Each signal stream is loaded with an antenna weight vector (AWV) through a digitally keyed phase shifter, and is transmitted from a multi-antenna unit to a high-band physical propagation channel. At the receiving end, radio frequency signal streams received by the multi-antenna unit are weighted and combined into a single signal stream. After radio frequency demodulation by the receiving end, multiple received signal streams are acquired by a receiver and sampled and received by the digital baseband.

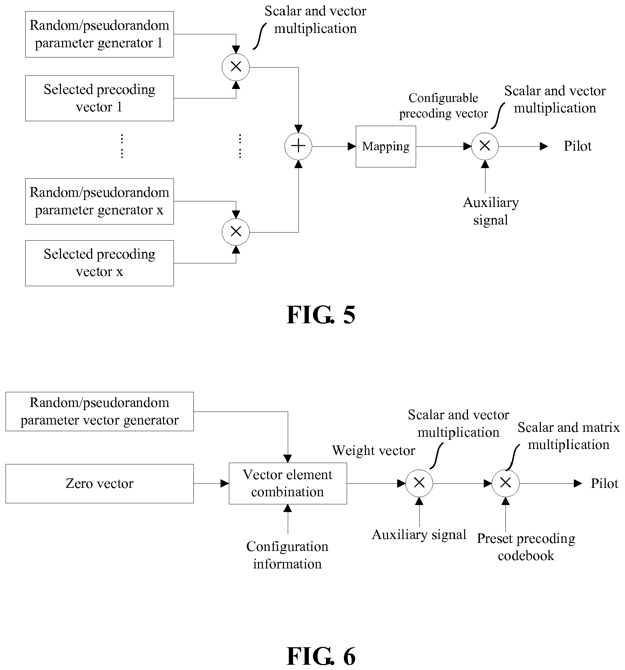

FIG. 5 is a schematic diagram of a pilot generation method according to specific embodiments. As shown in FIG. 5, first, a random/pseudorandom parameter generator generates a corresponding parameter weight scalar, which is multiplied by a selected precoding vector (the selection principle is based on configuration information); then, a total of x vector results are added up, and each element after the add operation is mapped to the nearest legal value by the mapping module to obtain a precoding vector; finally, the precoding vector is multiplied by a reference signal to generate a pilot. It is to be noted that in the hybrid precoding (also referred to as hybrid beamforming) transceiver structure shown in FIG. 4, the multiplication of the precoding vector by the reference signal can be implemented by baseband processing at the digital transmitting end, by a digitally keyed phase shifter at the analog end, or by a mixing of baseband processing at the digital transmitting end and the digitally keyed phase shifter at the analog end.

FIG. 6 is a schematic diagram of another pilot generation method according to specific embodiments. As shown in FIG. 6, first, vector elements of a random/pseudorandom parameter vector generator and a zero vector are combined according to configuration information to generate a weight vector; then, the weight vector is multiplied by a reference signal; finally, the multiplication result is multiplied by a predetermined precoding codebook to generate a pilot. It is to be noted that in the hybrid precoding (also referred to as hybrid beamforming) transceiver structure shown in FIG. 4, the multiplication of the preset codebook by the reference signal can be implemented by baseband processing at the digital transmitting end, by a digitally keyed phase shifter at the analog end, or by a mixing of baseband processing at the digital transmitting end and the digitally keyed phase shifter at the analog end.

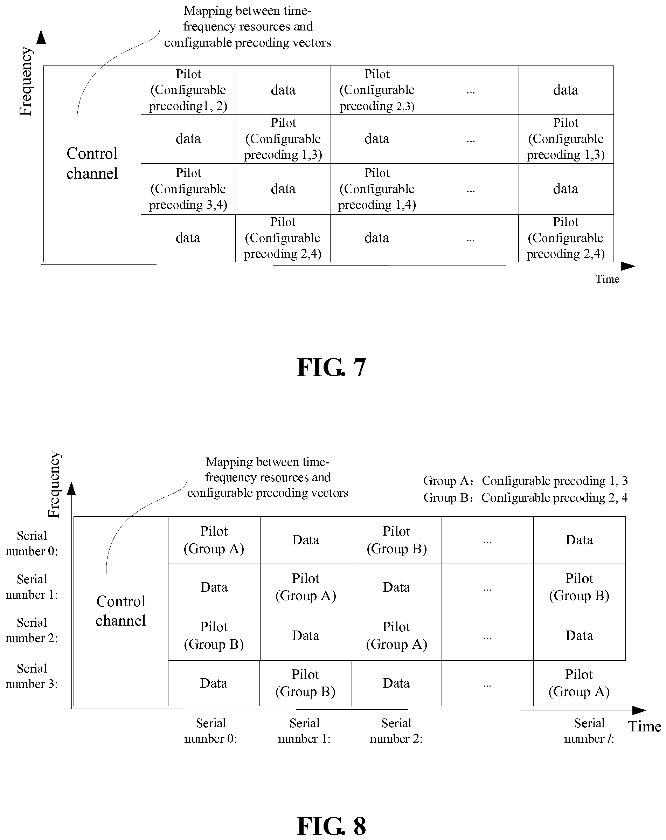

FIG. 7 is a schematic diagram illustrating a mapping between time-frequency resources and precoding vectors according to specific embodiments. As shown in FIG. 7, first, a control channel carries training information including "mapping between time-frequency resources and precoding vectors"; then, under the limiting condition where each time-frequency resource for training carries two precoding vectors, the precoding vectors are randomly mapped to the time-frequency resources.

FIG. 8 is a schematic diagram illustrating another mapping between time-frequency resources and precoding vectors according to specific embodiments. As shown in FIG. 8, first, a control channel carries training information including "mapping between time-frequency resources and precoding vectors"; then, precoding vectors 1 and 3 and precoding vectors 2 and 4 are grouped into group A and group B respectively. A correspondence between group A and time-frequency resources is: frequency domain number = (time domain number)%4; a correspondence between group B and time-frequency resources is: frequency domain number = (time domain number + 2)%4, % denotes a remainder operation.

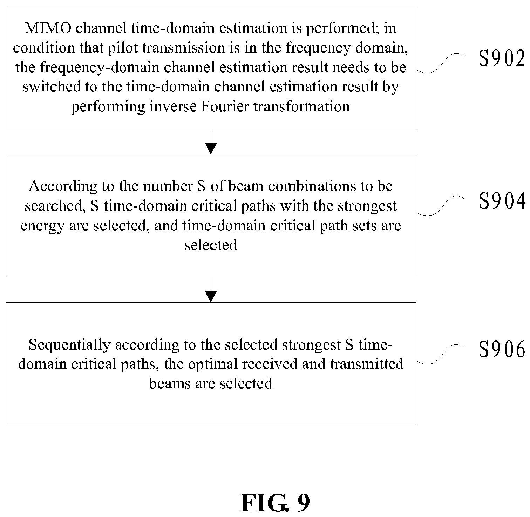

FIG. 9 is a flowchart of an algorithm for implementing multipath precoding (beam) combination detection according to specific embodiments. As shown in FIG. 9:

In S902, MIMO channel time-domain estimation is performed; in condition that pilot transmission is in the frequency domain, the frequency-domain channel estimation result needs to be switched to the time-domain channel estimation result by performing inverse Fourier transformation.

In S904, according to the number S of beam combinations to be searched, S time-domain critical paths with the strongest energy are selected, and time-domain critical path sets are selected.

In S906, sequentially according to the selected strongest S time-domain critical paths, the optimal received and transmitted beams are selected.

A feasible implementation of multipath precoding (beam) combination detection is as follows:

Before the multipath precoding (beam) combination detection algorithm is executed, each responder independently estimates the MIMO channel response under different precoding (beam) groups. The responder obtains optimal precoding (beam) combination sequence number sets $\{\hat{l}_0, \hat{l}_1, ..., \hat{l}_{S-1}\}$ and $\{\hat{k}_0, \hat{k}_1, ..., \hat{k}_{S-1}\}$, relative time delay $\{\hat{\omega}_0, \hat{\omega}_1, ..., \hat{\omega}_{S-1}\}$ and received signal power $\{\hat{p}_0, \hat{p}_1, ..., \hat{p}_{S-1}\}$ by using a multipath precoding (beam) combination detection algorithm. Where $\hat{l}_i$ denotes a transmitted precoding (beam) sequence number, and $\hat{l}_i$ may be provided to an initiator, such as a base station. Where $\hat{k}_i$ denotes a received precoding (beam) sequence number, and $\hat{k}_i$ may be provided to a responder, such as a UE. S denotes the number of paths expected to be resolved. Specifically, the processing method is the same for any responder.

Input: MIMO time-domain channel response $\{\hat{h}_{i,x_r,x_t}(\ell), \forall i, x_r, x_t, \ell\}$. $i$ denotes a training pilot number. $x_r$ denotes a receiving antenna number. $x_t$ denotes a transmitting antenna number. $\ell$ denotes a relative delay. S denotes the number of paths to be resolved.

Output: channel state information (CSI), including: optimal precoding (beam) combination sequence number sets $\{\hat{l}_0, \hat{l}_1, ..., \hat{l}_{S-1}\}$ and $\{\hat{k}_0, \hat{k}_1, ..., \hat{k}_{S-1}\}$, relative delay $\{\hat{\omega}_0, \hat{\omega}_1, ..., \hat{\omega}_{S-1}\}$ and received signal power $\{\hat{p}_0, \hat{p}_1, ..., \hat{p}_{S-1}\}$.

Critical path selection:

From the MIMO time-domain channel response $\{\hat{h}_{i,x_r,x_t}(\ell), \forall i, x_r, x_t, \ell\}$, S relative delays with the maximum energy, that is, S critical paths having the maximum energy, are selected. The relative delay serves as the indication of a critical path. If $\Omega$ is used to denote the relative delay corresponding to the critical path, then

$$\sum_i \sum_{x_r} \sum_{x_t} |\hat{h}_{i,x_r,x_t}(\ell)|^2 \geq \sum_i \sum_{x_r} \sum_{x_t} |\hat{h}_{i,x_r,x_t}(\lambda)|^2, \forall \ell \in \Omega, \forall \lambda \notin \Omega \qquad (1)$$

In the above formula, $\Omega = \{\hat{\omega}_0, \hat{\omega}_1, ..., \hat{\omega}_{S-1}\}$.

Optimal precoding (beam) combination detection:
For each $\omega_m$ relative delay, the sequence number of the optimal precoding (beam) combination is searched:

$$\hat{\chi}_m = \arg\min_{\chi} \left| \frac{\Xi_\chi^H}{\left\| \Xi_\chi \right\|_2} \hat{\mathbf{h}}_{\omega_m} \right| \qquad (2)$$

$|\cdot|$ denotes an absolute value. $\left\| \cdot \right\|_2^2$ denotes the square of a 2-Norm. $\Xi_\chi$ denotes a vector in the $\chi$ column of the detection matrix $\Xi$. The detection matrix $\Xi \in \square^{n_{RF}^r n_{RF}^t \xi \times K_r K_t}$ is known.

$$\Xi = \begin{bmatrix} \mathbf{B}_{t,0}^T \otimes \mathbf{B}_{r,0}^H \\ \vdots \\ \mathbf{B}_{t,\xi-1}^T \otimes \mathbf{B}_{r,\xi-1}^H \end{bmatrix} \qquad (3)$$

Matrix $\mathbf{B}_{r,i} = \mathbf{W}_r^H \left( \mathbf{W}_r \mathbf{W}_r^H \right)^{-1} \mathbf{U}_{r,i}$, $\mathbf{B}_{t,i} = \mathbf{W}_t^H \left( \mathbf{W}_t \mathbf{W}_t^H \right)^{-1} \mathbf{U}_{t,i}$, channel response vector

$$\hat{\mathbf{h}}_{\omega_m} = \left[ \hat{h}_{0,0,0}(\omega_m), \hat{h}_{0,0,1}(\omega_m), \ldots, \hat{h}_{0,0,n_{RF}^t-1}(\omega_m), \hat{h}_{0,1,0}(\omega_m), \ldots, \hat{h}_{\xi-1,n_{RF}^r-1,n_{RF}^t-1}(\omega_m) \right]^T.$$

Therefore, the optimal received and transmitted precoding (beam) sequence number under the $\omega_m$ relative delay is as follows:

$$\begin{aligned} \hat{k}_m &= \left\lfloor \hat{\chi}_m / K_r \right\rfloor \\ \hat{l}_m &= \hat{\chi}_m - K_r \hat{k}_m \end{aligned} \qquad (4)$$

The corresponding power is:

$$\hat{p}_m = \left\| \left( \Xi_{\hat{\chi}_m}^H \Xi_\chi \right)^{-1} \Xi_{\hat{\chi}_m}^H \hat{\mathbf{h}}_{\omega_m} \right\|_2^2 \qquad (5)$$

Channel state information (CSI) output: sets of optimal precoding (beam) combination sequence numbers for different physical paths: $\{\hat{l}_0, \hat{l}_1, \ldots, \hat{l}_{S-1}\}$ and $\{\hat{k}_0, \hat{k}_1, \ldots, \hat{k}_{S-1}\}$, relative delay $\{\hat{\omega}_0, \hat{\omega}_1, \ldots, \hat{\omega}_{S-1}\}$ and received signal power $\{\hat{p}_0, \hat{p}_1, \ldots, \hat{p}_{S-1}\}$.

Special note:

The AWV group under the transmitting-end precoding group $i$ is defined as $\mathbf{U}_{t,i} = \left[ \mathbf{u}_{t,i,0}, \ldots, \mathbf{u}_{t,i,n_{RF}^t-1} \right]$. $\mathbf{U}_{t,i}^{(j)}$ denotes the antenna weight vector of the xth transmitting radio frequency path. For the $j$th transmitting end, the corresponding AWV group is denoted by $\mathbf{U}_{t,i}^{(j)}$. For ease of discussion, the transmitting-end AWV is $\mathbf{U}_{t,i}$ by default when there is no need to specify the transmitting end.

The AWV group under the receiving-end precoding group $i$ is defined as $\mathbf{U}_{r,i} = \left[ \mathbf{u}_{r,i,0}, \ldots, \mathbf{u}_{r,i,n_{RF}^r-1} \right]$. $\mathbf{u}_{r,i,x}$ denotes the antenna weight vector of the xth receiving radio frequency path. For the jth receiving end, the corresponding AWV group is denoted by $\mathbf{U}_{t,i}^{(j)}$. For ease of discussion, the receiving-end AWV is $U_{t,i}$ by default when there is no need to specify the receiving end.

The data transmission precoding (beam) antenna weight vector (AWV) set in the data transmission phase may be different from the detection precoding (beam) AWV set in the training phase. If the transmission precoding (beam) AWVs in the data transmission phase is the same as the detection beam AWVs in the hybrid precoding (beam) training phase, the solution proposed in this patent still applies. Accordingly, the symbol "**w**" denotes the transmission precoding (beam) AWV, and the symbol "**u**" denotes the detection precoding (beam) AWV. In particular, the transmission precoding (beam) AWV is specified by a preset directional precoding (beam) codebook. The transmission precoding (beam) code-book is an $N \times K$ matrix, that is, $\mathbf{W} \in \mathbb{C}^{N \times K}$. $N$ denotes the number of antenna units. $K$ denotes the number of directional precoding (beams) specified by the transmission precoding (beam) codebook. $N \le K$. Accordingly, a received transmission precoding (beam) codebook is an $N_r \times K_r$ matrix, that is, $\mathbf{W}_r \in \mathbb{C}^{N_r \times K_r}$. $N_r$ denotes the number of antenna units at the receiving end. $K_r$ denotes the number of directional precoding (beams) specified by a received codebook matrix. A transmitted transmission precoding (beam) codebook is an $N_t \times K_t$ matrix, that is, $\mathbf{W}_t \in \mathbb{C}^{N_t \times K_t}$. $N_t$ denotes the number of antenna units at the transmitting end. $K_t$ denotes the number of directional precoding (beams) specified by a transmitted codebook matrix. Each column of the matrix $\mathbf{W}_r$ and matrix $\mathbf{W}_t$ represents a preset AWV that produces directional precoding (beams). $\mathbf{W}_{r,k}$ denotes the $k$th column of a received codebook matrix $\mathbf{W}_r$. $\mathbf{W}_{t,l}$ denotes the $l$th column of a transmitted codebook matrix $\mathbf{W}_t$.

Through a protocol provision or advanced notification, the receiving end has known AWVs of all data transmission precoding (beams) at the transmitting end and AWVs of all detection precoding (beams) at the transmitting end.

It is to be noted that this patent is not limited to the method for generating a transmission precoding (beam) codebook.

When the number of antennas is $N = N_\theta N_\phi$ and the number of precoding (beams) is q times the number of antennas, the AWV of the kth feedback codebook is:

$$\mathbf{w}_{r,k} = \mathrm{Quant}\left[ e^{j2\pi\alpha 0\sin\theta\cos\phi + j2\pi\alpha 0\cos\phi}, e^{j2\pi\alpha 1\sin\theta\cos\phi + j2\pi\alpha 1\cos\phi}, \ldots, e^{j2\pi\alpha(N-1)\sin\theta\cos\phi + j2\pi\alpha(N-1)1\cos\phi} \right]$$

$\theta = \pi((k \bmod q N_\theta) - q N_\theta/2)/q N_\theta$. $\phi = \pi(\lfloor k/q N_\theta \rfloor - q N_\phi/2)/q N_\phi$. Quant is a quantization function that maps the angle of each element to the closest available quantization angle. $\alpha$ denotes a weighting factor, which is 1 at half-wavelength spacing.

Without the limitation of quantization precision, the AWV of the $k$th feedback codebook can be simplified as:

$$\mathbf{w}_{r,k} = \left[ e^{j2\pi\alpha 0\sin\theta\cos\phi + j2\pi\alpha 0\cos\phi}, e^{j2\pi\alpha 1\sin\theta\cos\phi + j2\pi\alpha 1\cos\phi}, \ldots, e^{j2\pi\alpha(N-1)\sin\theta\cos\phi + j2\pi\alpha(N-1)1\cos\phi} \right]$$

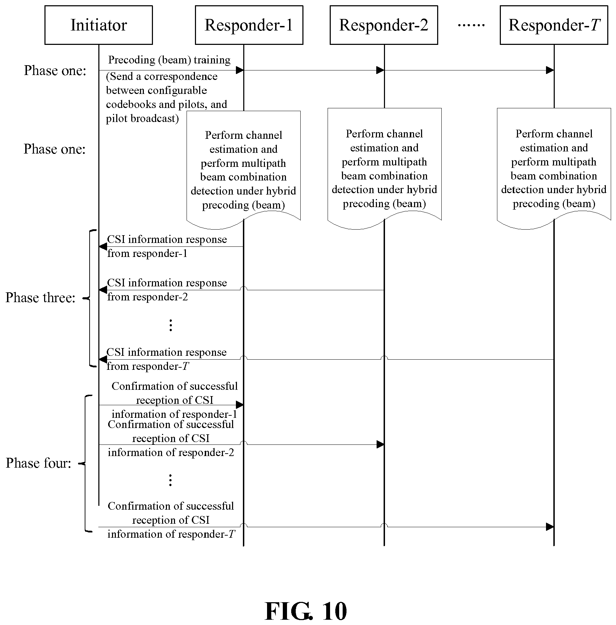

FIG. 10 is a flowchart of feasible hybrid precoding (beam) training according to specific embodiments. As shown in FIG. 10, the initiator initiates hybrid precoding (beam) training, and the responder responds to hybrid precoding (beam) training; unified feedback is performed after the initiator successfully receives confirmation signals.

Phase 1: synchronous hybrid precoding (beam) training phase. The initiator notifies each responder of a correspondence between codebook and pilot and broadcasts the pilot to each responder; (the receiver can use the hybrid precoding (beam) to receive the training pilot).

Phase 2: beam detection phase. Each responder utilizes pilots under all precoding (beam) combinations to perform channel estimation, then performs multipath beam combination detection, and outputs received and transmitted sequences and received signal power under multipath.

Phase 3: result feedback phase. Each responder sequentially feeds the CSI information back to the initiator.

Phase 4: result confirmation phase. After the initiator confirms the successful reception, each responder sequentially feeds back confirmation information of successful reception of CSI information.

Embodiments of the present invention further provide a pilot transmission apparatus for implementing the preceding embodiments and preferred implementations. What has been described will not be repeated. As used below, the term "module" may be software, hardware or a combination thereof capable of implementing preset functions. The apparatus in the embodiments described below is preferably implemented by software, but implementation by hardware or by a combination of software and hardware is also possible and conceived.

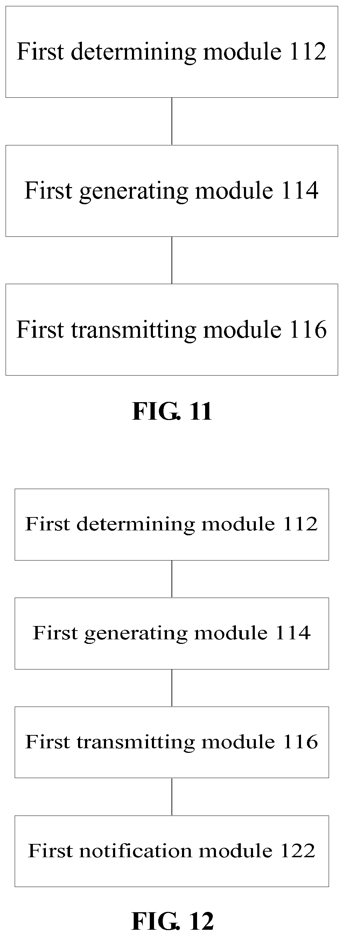

FIG. 11 is a block diagram (No.1) of a pilot transmission apparatus according to embodiments of the present invention. The pilot transmission apparatus is applied in a transmitting end. As shown in FIG. 11, the apparatus includes a first determining module 112, a first generating module 114 and a first transmitting module 116. The apparatus is described below.

The first determining module 112 is configured to determine N precoding vectors. The first generating module 114 is connected to the first determining module 112 and is configured to generate a pilot according to the N precoding vectors. The first transmitting module 16 is connected to the first generating module 114 and is configured to transmit the pilot to a receiving end on M time-frequency resources. The M and the N are integers greater than or equal to 1.

In an optional embodiment, FIG. 12 is a preferred block diagram (one) of a pilot transmission apparatus according to embodiments of the present invention. As shown in FIG. 12, the apparatus includes all modules shown in FIG. 11 and may further include: a first notification module 122, which is connected to the first transmitting module 116 and is configured to notify the receiving end of a correspondence between the M time-frequency resources and the N precoding vectors.

In an optional embodiment, the first determining module 112 is configured to determine each of the N precoding vectors by: selecting Q2 vectors from a codebook including Q1 vectors, where the Q1 and the Q2 are integers greater than or equal to 1 and the Q1 is greater than or equal to the Q2; generating E weight elements according to a random function or a pseudorandom function, where the E is an integer greater than or equal to 1; generating a vector according to the Q2 vectors and the E weight elements; performing numerical mapping on the generated vector according to a limiting condition of a value range of a preset precoding vector, and mapping each element in the generated vector to a nearest legal value; and forming one of the precoding vectors based on mapped values.

In an optional embodiment, the random function includes one of: a random complex Gaussian distribution function and a random complex Bernoulli distribution function.

In an optional embodiment, the pseudorandom function includes one of: a pseudorandom m sequence, a pseudorandom M sequence and a Golay sequence.

In an optional embodiment, the generating, by the transmitting end, the vector according to the Q2 vectors and the E weight elements includes one of the following: generating, by the transmitting end, the vector by adding results of multiplication of each of the Q2 vectors by a respective one of the E weight elements; in condition that the transmitting end determines that the Q2 is less than or equal to the E, generating the vector by adding results of multiplication of each of the Q2 vectors by a respective one of Q2 weight elements that are selected from the E weight elements; and in condition that the transmitting end determines that the E is less than or equal to the Q2, generating the vector by adding results of multiplication of each of the E weight elements by a respective one of E vectors that are selected from the Q2 vectors.

In an optional embodiment, the first generating module 124 generates the pilot according to the N precoding vectors by: generating the pilot based on multiplication of a predetermined reference signal and the precoding vectors.

In an optional embodiment, a correspondence between the M time-frequency resources and the N precoding vectors includes one of the following: mapping any one of the N precoding vectors to at least one of the M time-frequency resources; and grouping the N precoding vectors in units of K, and mapping each group of precoding vectors to at least one of the M time-frequency resources, where the K is an integer greater than or equal to 1.

In an optional embodiment, the mapping includes one of the following: a random mapping; and a mapping based on a specific function.

In an optional embodiment, the precoding vectors include one of the following: precoding vectors configured or selected by the transmitting end according to predetermined information, which include one of the following: precoding vectors allowed by a constant amplitude and a limited phase, precoding vectors allowed by a limited amplitude and a limited phase, and precoding vectors under no constraint of amplitude and phase; and precoding vectors by precoding a reference signal by the transmitting end, which include one of the following: digital precoding vectors, analog precoding vectors, and mixed analog and digital precoding vectors.

In an optional embodiment, a transmit beam pattern corresponding to the pilot includes at least one of the following features: an intensity of the beam pattern in any direction or a distance between the beam pattern and an origin is less than a specific threshold; and a cross-correlation value of any two beam patterns in spatial response is less than a specific threshold.

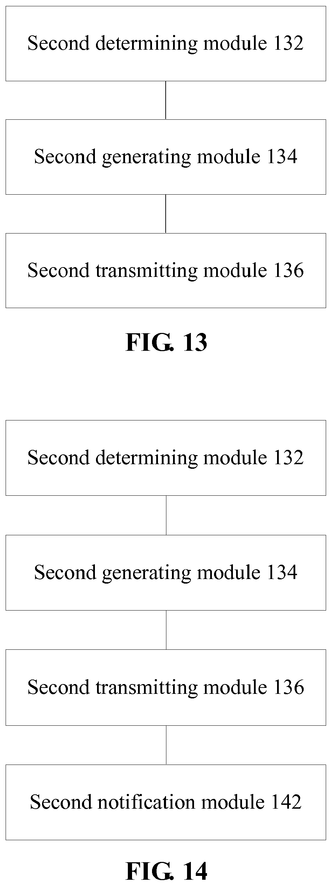

FIG. 13 is a block diagram (No. 2) of a pilot transmission apparatus according to embodiments of the present invention. The apparatus is applied to a transmitting end. As shown in FIG. 13, the apparatus includes a second determining module 132, a second generating module 134 and a second transmitting module 136. The apparatus is described below.

The second determining module 132 is configured to determine X weight vectors. The second generating module 134 is connected to the second determining module 132 and is configured to generate a pilot according to the X weight vectors. The second transmitting module 136 is connected to the second generating module 134 and is configured to transmit the pilot to a receiving end on Y time-frequency resources. The X and the Y are integers greater than or equal to 1.

In an optional embodiment, FIG. 14 is a preferred block diagram (No. 2) of a pilot transmission apparatus according to embodiments of the present invention. The apparatus is applied to a transmitting end. As shown in FIG. 14, the apparatus further includes a second notification module 142 in addition to the apparatus shown in FIG. 13. The second notification module 142 is configured to notify the receiving end of a correspondence between the X weight vectors and the Y time-frequency resources.

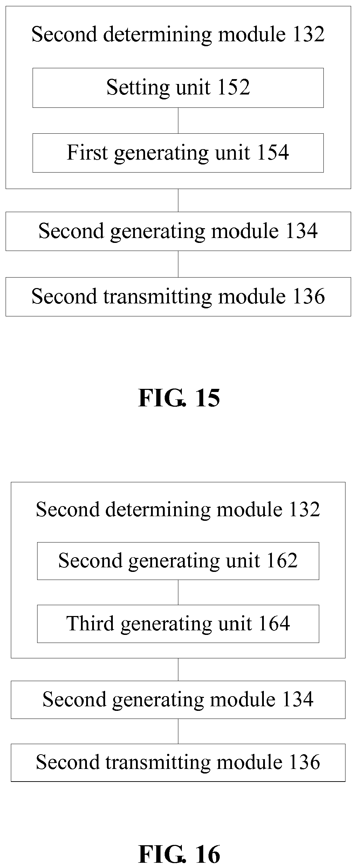

In an optional embodiment, FIG. 15 is a block diagram of a second determining module 132 of a pilot transmission apparatus according to embodiments of the present invention. As shown in FIG. 15, the second determining module 132 includes a setting unit 152 and a first generating unit 154. The second determining module 132 is described below.

The setting unit 152 is configured to set K elements in each weight vector to be zero, where K is an integer greater than or equal to 0. The first generating unit 154 is connected to the setting unit 152 and is configured to regenerate a value of an element set to be non-zero in the each weight vector according to a random function or a pseudorandom function.

In an optional embodiment, the random function includes one of: a random complex Gaussian distribution function and a random complex Bernoulli distribution function.

In an optional embodiment, the pseudorandom function includes one of: a pseudorandom m sequence, a pseudorandom M sequence and a Golay sequence.

In an optional embodiment, the second generating module 134 generates the pilot according to the X weight vectors and the precoding codebook by: generating, by the transmitting end, a vector S based on multiplication of a reference signal by the X weight vectors; and uacquiring, by the transmitting end, the pilot by adding results of multiplication of each precoding vector in the precoding codebook by a respective element in the vector S.

In an optional embodiment, the precoding vectors include one of the following: precoding vectors allowed by a constant amplitude and a limited phase; precoding vectors allowed by a limited amplitude and a limited phase; and precoding vectors under no constraint of amplitude and phase.

In an optional embodiment, a correspondence between the X time-frequency resources and the Y weight vectors includes one of the following: mapping any one of the Y weight vectors to at least one of the X time-frequency resources; and grouping the Y weight vectors in units of L, and mapping each group of weight vectors to at least one of the X time-frequency resources, where the L is an integer greater than or equal to 1.

In an optional embodiment, the mapping includes one of the following: a random mapping; and a mapping based on a specific function.

In an optional embodiment, a transmit beam pattern corresponding to the pilot includes at least one of the following features: an intensity of the beam pattern in any direction or a distance between the beam pattern and an origin is less than a specific threshold; and a cross-correlation value of any two beam patterns in spatial response is less than a specific threshold.

FIG. 16 is a block diagram (No. 2) of a second determining module 132 of a pilot transmission apparatus according to embodiments of the present invention. As shown in FIG. 16, the second determining module 132 includes a second generating unit 162 and a third generating unit 164. The apparatus is described below.

The second generating unit 162 is configured to generate E weight elements according to a random function or a pseudorandom function, and select R vectors from a preset vector set. The third generating unit 164 is connected to the second generating unit 162 and is configured to generate a weight vector according to the E weight elements and the R vectors, where the E and the R are integers greater than or equal to 1.

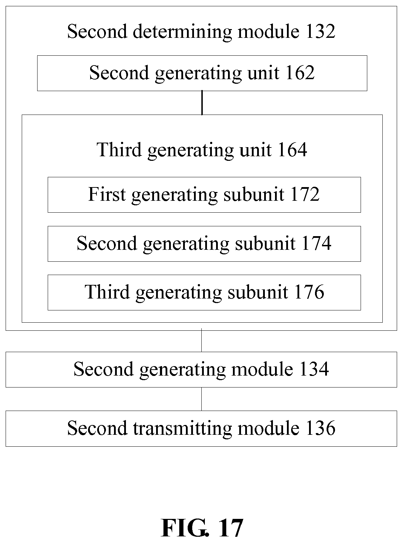

FIG. 17 is a block diagram of a third generating module 164 of a pilot transmission apparatus according to embodiments of the present invention. As shown in FIG. 17, the third generating unit 164 includes one of the following: a first generating subunit 172, which is configured to generate the vector by superimposing results of multiplication of each of the R vectors and each of the E weight elements; a second generating subunit 174, which is configured to, in condition that that the R is less than or equal to the E, generate the vector by superimposing results of multiplication of each of the R vectors and a respective one of R weight elements that are selected from the E weight elements; and a third generating subunit 176, which is configured to, in condition that the E is less than or equal to the R, generate the vector by superimposing results of multiplication of each of the E vector elements and a respective one of E vectors selected from the R vectors.

In an optional embodiment, the random function includes one of: a random complex Gaussian distribution function and a random complex Bernoulli distribution function.

In an optional embodiment, the pseudorandom function includes one of: a pseudorandom m sequence, a pseudorandom M sequence and a Golay sequence.

It is to be noted that the various modules described above may be implemented by software or hardware. Implementation by hardware may, but may not necessarily, be performed by the following method: The various modules described above are located in a same processor; or, in any combination, the various modules are located in different processors.

Embodiments of the present invention further provide a storage medium. Optionally, in this embodiment, the storage medium may be configured to store program codes for executing the steps described above.

Optionally, in this embodiment, the storage medium may include, but is not limited to, a U disk, a read-only memory (ROM), a random access memory (RAM), a mobile hard disk, a magnetic disk, an optical disk or another medium capable of storing program codes.

Optionally, in this embodiment, the processor executes the preceding steps according to the program codes stored in the storage medium.

Optionally, for specific examples in this embodiment, reference may be made to the examples described in the preceding embodiments and optional implementations, and the specific examples will not be repeated in this embodiment.

Apparently, those skilled in the art should know that each above-mentioned module or step of the present invention may be implemented by a universal computing device, they may be concentrated on a single computing device or distributed in a network formed by multiple computing devices, and alternatively, they may be implemented by program codes executable by the computing devices, so that they may be stored in a storage device for execution by the computing devices, and in some circumstances, the illustrated or described steps may be executed in sequences different from those described herein, or they may be made into various integrated circuit modules separately, or multiple modules or steps therein may be made into a single integrated circuit module for implementation. Therefore, the present invention is not limited to any specific combination of hardware and software.

The above are only preferred embodiments of the present invention and are not intended to limit the present invention, and for those skilled in the art, the present invention may have various modifications and variations. Any modifications, equivalent substitutions, improvements and the like made within the spirit and principle of the present invention are within the scope of the present invention.

**INDUSTRIAL APPLICABILITY**

As described above, a pilot transmission method and apparatus provided by embodiments of the present invention have the following beneficial effects: solving the problem where a pilot is generated on the basis of a deterministic directional precoding codebook, and with a large-scale antenna array, data about optional beams at the receiving and transmitting ends increases greatly, and the number of beam combinations at the receiving and transmitting ends increases sharply in the related art, thereby causing a surge in pilot overheads; and achieving the effect of reducing training costs.

**Claims**

1. A pilot transmission method, comprising:

    determining, by a transmitting end, N precoding vectors;
    generating, by the transmitting end, a pilot according to the N precoding vectors; and
    transmitting, by the transmitting end, the pilot to a receiving end on M time-frequency resources, wherein the M and the N are integers greater than or equal to 1.

2. The method of claim 1, further comprising: notifying, by the transmitting end, the receiving end of a correspondence between the M time-frequency resources and the N precoding vectors.

3. The method of claim 1, wherein the determining, by the transmitting end, the N precoding vectors comprises: determining each of the N precoding vectors based on:

    selecting Q2 vectors from a codebook comprising Q1 vectors by the transmitting end, wherein the Q1 and the Q2 are integers greater than or equal to 1 and the Q1 is greater than or equal to the Q2;
    generating, by the transmitting end, E weight elements according to a random function or a pseudorandom function, wherein the E is an integer greater than or equal to 1;
    generating, by the transmitting end, a vector according to the Q2 vectors and the E weight elements;
    performing according to a limiting condition of a value range of a preset precoding vector, by the transmitting end, numerical mapping on the generated vector, and mapping each element in the generated vector to a nearest legal value; and

forming, by the transmitting end, one of the precoding vectors based on mapped values.

4. The method of claim 3, wherein the random function comprises one of: a random complex Gaussian distribution function and a random complex Bernoulli distribution function.

5. The method of claim 3, wherein the pseudorandom function comprises one of: a pseudorandom m sequence, a pseudorandom M sequence and a Golay sequence.

6. The method of claim 3, wherein the generating, by the transmitting end, the vector according to the Q2 vectors and the E weight elements comprises one of the following:

generating, by the transmitting end, the vector by adding results of multiplication of each of the Q2 vectors by a respective one of the E weight elements;

in condition that the transmitting end determines that the Q2 is less than or equal to the E, generating the vector by adding results of multiplication of each of the Q2 vectors by a respective one of Q2 weight elements that are selected from the E weight elements; and

in condition that the transmitting end determines that the E is less than or equal to the Q2, generating the vector by adding results of multiplication of each of the E weight elements by a respective one of E vectors that are selected from the Q2 vectors.

7. The method of claim 1, wherein the generating according to the N precoding vectors, by the transmitting end, the pilot; comprises:
generating, by the transmitting end, the pilot based on multiplication of a predetermined reference signal by the precoding vectors.

8. The method of claim 1, wherein a correspondence between the M time-frequency resources and the N precoding vectors comprises one of the following:

mapping any one of the N precoding vectors to at least one of the M time-frequency resources; and

grouping the N precoding vectors in units of K, and mapping each group of precoding vectors to at least one of the M time-frequency resources, wherein the K is an integer greater than or equal to 1.

9. The method of claim 8, wherein the mapping comprises one of the following:

a random mapping; and
a mapping based on a specific function.

10. The method of claim 1, wherein the precoding vectors comprise one of the following:

precoding vectors configured or selected by the transmitting end according to predetermined information, which comprise one of the following: precoding vectors allowed by a constant amplitude and a limited phase, precoding vectors allowed by a limited amplitude and a limited phase, and precoding vectors under no constraint of amplitude and phase; and

precoding vectors obtained by precoding a reference signal by the transmitting end, which comprise one of the following: digital precoding vectors, analog precoding vectors, and mixed analog and digital precoding vectors.

11. The method of claim 1, wherein a transmit beam pattern corresponding to the pilot comprises at least one of the following features:

an intensity of the beam pattern in any direction or a distance between the beam pattern and an origin is less than a specific threshold; and

a value of a cross-correlation between any two beam patterns in spatial response is less than a specific threshold.

12. A pilot transmission method, comprising:

determining, by a transmitting end, X weight vectors;
generating, by the transmitting end, a pilot according to the X weight vectors and a precoding codebook; and

transmitting, by the transmitting end, the pilot to a receiving end on Y time-frequency resources, wherein the X and the Y are integers greater than or equal to 1.

13. The method of claim 12, further comprising: notifying, by the transmitting end, the receiving end of a correspondence between the X time-frequency resources and the Y weight vectors.

14. The method of claim 12, wherein the determining, by the transmitting end, the X weight vectors comprises: determining each weight vector of the X weight vectors by:

setting, by the transmitting end, K elements in the each weight vector to be zero according to configuration information, wherein K is an integer greater than or equal to 0; and
regenerating, by the transmitting end, a value of an element set to be non-zero in the each weight vector according to a random function or a pseudorandom function.

15. The method of claim 14, wherein the random function comprises one of: a random complex Gaussian distribution function and a random complex Bernoulli distribution function.

16. The method of claim 14, wherein the pseudorandom function comprises one of: a pseudorandom m sequence, a pseudorandom M sequence and a Golay sequence.

17. The method of claim 12, wherein the generating, by the transmitting end, a pilot according to the X weight vectors and the precoding codebook comprises:

generating, by the transmitting end, a vector S based on multiplication of a reference signal by the X weight vectors; and
acquiring, by the transmitting end, the pilot by adding results of multiplication of each precoding vector in the precoding codebook by a respective element in the vector S.

18. The method of claim 17, wherein the precoding vectors comprise one of the following:

precoding vectors allowed by a constant amplitude and a limited phase;
precoding vectors allowed by a limited amplitude and a limited phase; and
precoding vectors under no constraint of amplitude and phase.

19. The method of claim 12, wherein a correspondence between the X time-frequency resources and the Y weight vectors comprises one of the following:

mapping any one of the Y weight vectors to at least one of the X time-frequency resources; and
grouping the Y weight vectors in units of L, and mapping each group of weight vectors to at least one of the X time-frequency resources, wherein the L is an integer greater than or equal to 1.

20. The method of claim 19, wherein the mapping comprises one of the following:

a random mapping; and
a mapping based on a specific function.

21. The method of claim 12, wherein a transmit beam pattern corresponding to the pilot comprises at least one of the following features:

an intensity of the beam pattern in any direction or a distance between the beam pattern and an origin is less than a specific threshold; and
a value of a cross-correlation between any two beam patterns in spatial response is less than a specific threshold.

22. The method of claim 12, wherein the determining, by the transmitting end, the X weight vectors comprises: determining each of the X weight vectors by:

generating E weight elements according to a random function or a pseudorandom function, and selecting R vectors from a preset vector set; and

generating a weight vector according to the E weight elements and the R vectors, wherein the E and the R are integers greater than or equal to 1.

23. The method of claim 22, wherein the generating the weight vector according to the E weight elements and the R vectors comprises one of the following:

generating the vector by adding results of multiplication of each of the R vectors by a respective one of the E weight elements;

in condition that the R is less than or equal to the E, generating the vector by adding results of multiplication of each of the R vectors by a respective one of R weight elements that are selected from the E weight elements; and

in condition that the E is less than or equal to the R, generating the vector by adding results of multiplication of each of the E vector elements and a respective one of E vectors that are selected from the R vectors.

24. The method of claim 22, wherein the random function comprises one of: a random complex Gaussian distribution function and a random complex Bernoulli distribution function.

25. The method of claim 22, wherein the pseudorandom function comprises one of: a pseudorandom m sequence, a pseudorandom M sequence and a Golay sequence.

26. A pilot transmission apparatus, comprising:

a first determining module, which is configured to determine N precoding vectors;

a first generating module, which is configured to generate a pilot according to the N precoding vectors; and

a first transmitting module, which is configured to transmit the pilot to a receiving end on M time-frequency resources, wherein the M and the N are integers greater than or equal to 1.

27. The apparatus of claim 26, further comprising: a first notification module, which is configured to notify the receiving end of a correspondence between the M time-frequency resources and the N precoding vectors.

28. The apparatus of claim 26, further comprising:

a first determining module, which is configured to determine each of the N precoding vectors by:

selecting Q2 vectors from a codebook comprising Q1 vectors, wherein the Q1 and the Q2 are integers greater than or equal to 1 and the Q1 is greater than or equal to the Q2;

generating E weight elements according to a random function or a pseudorandom function, wherein the E is an integer greater than or equal to 1;

generating a vector according to the Q2 vectors and the E weight elements;

performing numerical mapping on the generated vector according to a limiting condition of a value range of a preset precoding vector, and mapping each element in the generated vector to a nearest legal value; and

forming one of the precoding vectors based on mapped values.

29. A pilot transmission apparatus, which is applied to a transmitting end, comprising:

a second determining module, which is configured to determine X weight vectors;

a second generating module, which is configured to generate a pilot according to the X weight vectors and a precoding codebook; and

a second transmitting module, which is configured to transmit the pilot to a receiving end on Y time-frequency resources, wherein the X and the Y are integers greater than or equal to 1.

30. The apparatus of claim 29, further comprising:

a second notification module, which is configured to notify the receiving end of a correspondence between the X time-frequency resources and the Y weight vectors.

31. The apparatus of claim 29, wherein the second determining module comprises:

a setting unit, which is configured to set K elements in the each weight vector to be zero, wherein K is an integer greater than or equal to 0; and

a first generating unit, which is configured to regenerate a value of an element set to be non-zero in the each weight vector according to a random function or a pseudorandom function.

**32.** The apparatus of claim 29, wherein the second determining module comprises:

a second generating unit, which is configured to generate E weight elements according to a random function or a pseudorandom function, and select R vectors from a preset vector set; and
a third generating unit, which is configured to generate a weight vector according to the E weight elements and the R vectors, wherein the E and the R are integers greater than or equal to 1.

**33.** The apparatus of claim 32, wherein the third generating unit comprises one of the following:

a first generating subunit, which is configured to generate the vector by adding results of multiplication of each of the R vectors by a respective one of the E weight elements;
a second generating subunit, which is configured to, in condition that the R is less than or equal to the E, generate the vector by adding results of multiplication of each of the R vectors and a respective one of R weight elements that are selected from the E weight elements; and
a third generating subunit, which is configured to, in condition that the E is less than or equal to the R, generate the vector by adding results of multiplication of each of the E vector elements by a respective one of E vectors that selected from the R vectors.

**34.** A storage medium, comprising stored programs, wherein, when executed, the programs perform the method of any one of claims 1 to 25.

Mobile terminal **10**

| Processor **102** | ⇄ | Transmission device **106** |

| Memory **104** |

**FIG. 1**

| A transmitting end determines N precoding vectors | S202 |

↓

| The transmitting end generates a pilot according to the N precoding vectors | S204 |

↓

| The transmitting end transmits the pilot to a receiving end on M time-frequency resources, where the M and the N are integers greater than or equal to 1 | S206 |

**FIG. 2**

A transmitting end determines X weight vectors; and the transmitting end generates a pilot according to the X weight vectors and a precoding codebook

~ S302

The transmitting end transmits the pilot to a receiving end on Y time-frequency resources, where X and Y are integers greater than or equal to 1

~ S304

**FIG. 3**

Transmitting end    Physical channel    Splitter    Phase shifter    Receiving end

Radio frequency path

Antenna array:
$N_{t,\theta} \times N_{t,\varphi}$

Antenna array:
$N_{r,\theta} \times N_{r,\varphi}$

Radio frequency path

$n^t_{RF}$

$N_t$

Directional beam    Directional beam

Directional beam    Directional beam

$N_r$

$n^r_{RF}$

Radio frequency path

$N_t = N_{t,\theta} N_{t,\phi}$

$N_r = N_{r,\theta} N_{r,\phi}$

Radio frequency path

Reflective surface

**FIG. 4**

Scalar and vector
∫ multiplication

Random/pseudorandom
parameter generator 1

Selected precoding
vector 1

⊗

⋮ ⋮

Random/pseudorandom
parameter generator x

Selected precoding
vector x

⊗

⊕ → Mapping → ⊗ → Pilot

Configurable
precoding vector

Scalar and vector
∫ multiplication

Auxiliary
signal

**FIG. 5**

Random/pseudorandom
parameter vector generator

Zero vector

Vector element
combination

⊗ → ⊗ → Pilot

Weight vector

Scalar and vector
multiplication

Scalar and matrix
multiplication

Configuration
information

Auxiliary signal    Preset precoding
codebook

**FIG. 6**

Mapping between time-
frequency resources and
configurable precoding vectors

| Control channel | Pilot (Configurable precoding1, 2) | data | Pilot (Configurable precoding 2,3) | ... | data |
| | data | Pilot (Configurable precoding 1,3) | data | ... | Pilot (Configurable precoding 1,3) |
| | Pilot (Configurable precoding 3,4) | data | Pilot (Configurable precoding 1,4) | ... | data |
| | data | Pilot (Configurable precoding 2,4) | data | ... | Pilot (Configurable precoding 2,4) |

Frequency

Time

**FIG. 7**

Mapping between time-
frequency resources and
configurable precoding vectors

Group A: Configurable precoding 1, 3
Group B: Configurable precoding 2, 4

| | Control channel | Pilot (Group A) | Data | Pilot (Group B) | ... | Data |
| Serial number 0: | | | | | | |
| Serial number 1: | | Data | Pilot (Group A) | Data | ... | Pilot (Group B) |
| Serial number 2: | | Pilot (Group B) | Data | Pilot (Group A) | ... | Data |
| Serial number 3: | | Data | Pilot (Group B) | Data | ... | Pilot (Group A) |

Frequency

Serial number 0:    Serial number 1:    Serial number 2:    Serial number *l*:

Time

**FIG. 8**

MIMO channel time-domain estimation is performed; in condition that pilot transmission is in the frequency domain, the frequency-domain channel estimation result needs to be switched to the time-domain channel estimation result by performing inverse Fourier transformation — S902

According to the number S of beam combinations to be searched, S time-domain critical paths with the strongest energy are selected, and time-domain critical path sets are selected — S904

Sequentially according to the selected strongest S time-domain critical paths, the optimal received and transmitted beams are selected — S906

**FIG. 9**

FIG. 10

First determining module 112

First generating module 114

First transmitting module 116

**FIG. 11**

First determining module 112

First generating module 114

First transmitting module 116

First notification module 122

**FIG. 12**

Second determining module 132

Second generating module 134

Second transmitting module 136

**FIG. 13**

Second determining module 132

Second generating module 134

Second transmitting module 136

Second notification module 142

**FIG. 14**

Second determining module 132

Setting unit 152

First generating unit 154

Second generating module 134

Second transmitting module 136

**FIG. 15**

Second determining module 132

Second generating unit 162

Third generating unit 164

Second generating module 134

Second transmitting module 136

**FIG. 16**

Second determining module 132

Second generating unit 162

Third generating unit 164

First generating subunit 172

Second generating subunit 174

Third generating subunit 176

Second generating module 134

Second transmitting module 136

**FIG. 17**

## INTERNATIONAL SEARCH REPORT

| International application No. |
| --- |
| PCT/CN2017/095390 |

**A. CLASSIFICATION OF SUBJECT MATTER**

H04L 5/00 (2006.01) i; H04L 1/06 (2006.01) i; H04B 7/04 (2017.01) n

According to International Patent Classification (IPC) or to both national classification and IPC

**B. FIELDS SEARCHED**

Minimum documentation searched (classification system followed by classification symbols)

H04L, H04B, H04W

Documentation searched other than minimum documentation to the extent that such documents are included in the fields searched

Electronic data base consulted during the international search (name of data base and, where practicable, search terms used)

CPRSABS, CNABS, CNTXT, CNKI, VEN, USTXT, WOTXT, EPTXT: 导频, 预编码, 波束成形, 矢量, 向量, 矩阵, 码本, 发送, 接收, 时频, 时域, 频域, 对应, 映射, 随机, 权重, 权值, 乘, 参考信号, 训练, 花销, pilot, precod+, beamform, vector?, matrix, matrice?, AWV, codebook, send, transmi+, receiv+, time, frequency, correspond????, map, random, weitht, multipl+, RS, train???, cost

**C. DOCUMENTS CONSIDERED TO BE RELEVANT**

| Category* | Citation of document, with indication, where appropriate, of the relevant passages | Relevant to claim No. |
| --- | --- | --- |
| X | CN 102300299 A (HUAWEI TECHNOLOGIES CO., LTD.) 28 December 2011 (28.12.2011), see description, paragraphs [0005]-[0012] | 1, 2, 8, 9, 11-13, 19-21, 26, 27, 29, 30, 34 |
| A | CN 102300299 A (HUAWEI TECHNOLOGIES CO., LTD.) 28 December 2011 (28.12.2011), see description, paragraphs [0005]-[0012] | 3-7, 10, 14-18, 22-25, 28, 31-33 |
| X | CN 105612707 A (HUAWEI TECHNOLOGIES CO., LTD.) 25 May 2016 (25.05.2016), see claim 1 | 1, 2, 8, 9, 11, 26, 27, 34 |
| A | CN 105612707 A (HUAWEI TECHNOLOGIES CO., LTD.) 25 May 2016 (25.05.2016), see claim 1 | 3-7, 10, 12-25, 28-33 |
| X | CN 101394213 A (ZTE CORPORATION) 25 March 2009 (25.03.2009), see claim 1 | 1, 2, 8, 9, 11, 26, 27, 34 |

☒ Further documents are listed in the continuation of Box C.    ☒ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&"document member of the same patent family |

| Date of the actual completion of the international search | Date of mailing of the international search report |
| --- | --- |
| 12 October 2017 | 19 October 2017 |

| Name and mailing address of the ISA<br>State Intellectual Property Office of the P. R. China<br>No. 6, Xitucheng Road, Jimenqiao<br>Haidian District, Beijing 100088, China<br>Facsimile No. (86-10) 62019451 | Authorized officer<br><br>WANG, Hongli<br><br>Telephone No. (86-10) 62088425 |

Form PCT/ISA /210 (second sheet) (July 2009)

## INTERNATIONAL SEARCH REPORT

| | International application No. |
|---|---|
| | PCT/CN2017/095390 |

**C (Continuation).** DOCUMENTS CONSIDERED TO BE RELEVANT

| Category* | Citation of document, with indication, where appropriate, of the relevant passages | Relevant to claim No. |
|---|---|---|
| A | CN 101394213 A (ZTE CORPORATION) 25 March 2009 (25.03.2009), see claim 1 | 3-7, 10, 12-25, 28-33 |
| A | US 2009232239 A1 (LG ELECTRONICS INC.) 17 September 2009 (17.09.2009), see entire document | 1-34 |

Form PCT/ISA /210 (continuation of second sheet ) (July 2009)

## INTERNATIONAL SEARCH REPORT
Information on patent family members

| | International application No. |
|---|---|
| | PCT/CN2017/095390 |

| Patent Documents referred in the Report | Publication Date | Patent Family | Publication Date |
|---|---|---|---|
| CN 102300299 A | 28 December 2011 | CN 102300299 B | 02 April 2014 |
| CN 105612707 A | 25 May 2016 | EP 3188393 A1 | 05 July 2017 |
| | | US 2017195019 A1 | 06 July 2017 |
| | | WO 2016041196 A1 | 24 March 2016 |
| CN 101394213 A | 25 March 2009 | CN 101394213 B | 08 May 2013 |
| US 2009232239 A1 | 17 September 2009 | US 8233559 B2 | 31 July 2012 |
| | | KR 20090097763 A | 16 September 2009 |
| | | KR 1499255 B1 | 06 March 2015 |

Form PCT/ISA /210 (patent family annex) (July 2009)